# EUROPEAN PATENT APPLICATION

(11) **EP 1 022 630 A1**
(43) Date of publication of application: **26.07.2000**
(21) Application number: 99101262.6
(22) Date of filing: 23.01.1999
(51) Int. Cl.: G05B 19/418

(54) **Method for the engineering of a manufacturing line**

(71) Applicant: ABB Research Ltd., 8050 Zürich (CH)
(72) Inventor: Malatier, Francois, F-95150 Taverny (FR); Kohn, Pierre, F-92600 Asnieres (FR); Nagel, Günther, Dr., D-76297 Slutensee (DE); Langer, Kurt, Dr., D-69160 Walldorf (DE); Weidemann, Hans-Jürgen, Dr., D-67346 Speyer (DE)
(74) Representative: Miller, Toivo

(57) **Abstract**

The invention relates to a method for the engineering of a discrete manufacturing line, especially a robot-based production line. The method comprises:
a) preparing a modular hierarchical organized system of reusable components and
b) designing and engineering of a specific manufacturing line by composing of prepared system components (1,2,3).

## Description

The invention relates to a method for the engineering of a discrete manufacturing line, especially a robot-based production line.

Discrete manufacturing lines, including robot-based production lines have usually to be built according to a variety of specific customer or sub-supplier standards and preferences. The control systems of such lines consist of programmable logic controllers (PLC) mainly. More complex operations such as robot control, welding, process monitoring, etc. are controlled by separate, dedicated controllers. Coordination of input and output channels and control software modules of these controllers with the complex and heterogeneous set of machinery, sensors and actuators used at the shop floor is engineered during the line design and commissioning phase and is not standardized.

This results in several disadvantages line integrator companies face today:
1. Line integrators, those are companies which engineer and produce production lines, start from scratch in each installation, facing repeated and high efforts, high cost, and relatively long duration of line commissioning.
2. Engineering and commissioning expenditure is not well known in advance.
3. Sharp commitments on system reliability are almost impossible - as long as there is no experience with a special customer standard from a former project.
4. Due to separate engineering of mechanical parts, process equipment and control system, there is no modular structure which would provide the possibility to build a line by pre-tested units. This leads to high planning, installation and commissioning cost and time.
5. The production lines typically feature an heterogeneous system structure, i.e. the system consists of a combination of subsystems and components from different suppliers with partly incompatible communication interfaces.
6. The structure of control and diagnostic data flow is difficult to understand by third persons, which leads to increased cost, effort and duration of changes or enhancements.
7. There is no common communication method between different components, which leads to high design effort and cost.
8. Several distributed HMI's (Human Machine Interfaces) with different look and feel are used which provide access to parts of the line equipment only.
9. No transparent information flow through the whole system is possible. Therefore, data acquired by subsystems are often not available for central application specific processing functions (e.g. monitoring and diagnosis).
10. These characteristics are also the reason for a missing system-wide data integrity. This missing data integrity and the limited bi-directional information transfer between subsystems lead to time-consuming restart problems after unexpected production stops.
11. Monitoring and diagnostic tools can only be add-on tools, i.e. the functionality of these tools is limited to the data available from the customers system and have to be adapted to it in every project.

It is accordingly an object of the invention to provide a method for the engineering of a discrete manufacturing line, which overcomes mentioned disadvantages of known engineering methods.

With the foregoing and other objects in view there is provided, in accordance with the invention, a method for the engineering of a discrete manufacturing line, especially a robot-based production line, which comprises:
a) preparing a modular hierarchical organized system of reusable components, wherein
   ■ the first and lowest level components are process components (e.g. robots, machinery or transportation units), called P-Comps, each realized by a collection of process hardware (e.g. motors, cylinders, valves and sensors), and components of software and hardware for at least control, alarm handling, diagnostic and documentation purposes,
   ■ the second system level contains at least one production cell, each cell containing a working closely together group of P-Comps, a cell controller, which co-ordinates the P-Comps, and software modules for higher level functions,
   ■ the third system level is defined as having at least one safety zone, each containing at least one cell,
   ■ as a top level the manufacturing line contains at least one safety zone, and
   ■ all software components and modules are adaptable, and
b) designing and engineering of a specific manufacturing line by composing of prepared system components by the following steps:
   ■ selection of P-Comps needed,
   ■ installation of P-Comp hardware on customers site,
   ■ installation of additional reusable cell hardware (e.g. cell controllers) on customers site,
   ■ installation, connection and configuration of software components on customers site, and
   ■ doing commissioning and system test.

In case of this method, preparing the modular system includes specifying software components on the second level, which act as an interface to a human operator, as mode manager, as safety manager for handling possible interlocks between mechanical components and which support functions for alarm handling, diagnosis, restart and others according to customer requirements.

In accordance with another mode of the invention, preparing the modular system includes specifying the P-Comps having only one communication interface visible from the system level.

In accordance with another feature of the invention, preparing the modular system includes specifying the P-Comps having a well defined software interface, mechanical interfaces, and energy and fluid interfaces.

In accordance with a further feature of the invention, preparing the modular system includes specifying the P-Comps each having its own intelligence as a software task either on an own Central Processing Unit (CPU) or as a software task running on an other CPU.

The invention includes a proposal for a process oriented system architecture and a planning method too.

Advantages of the proposed methods are:
■ Since P-Comps are standardized and partly pre-assembled units with ready-made hardware-, electrical- and software interfaces, new lines must not be engineered from scratch. Instead, P-Comp's are connected and configured.
■ The possibility of individual pre-testing, the product-like status of P-Comps, clearly defined interfaces and standardized cell designs shift a maximum of efforts and costs away from individual engineering into the P-Comp design phase. The design, realization and test of P- Comps has to be done once and is not repeated in individual installation. Therefore, the engineering effort and the commissioning duration shortens and can be well estimated in before. P-Comps can be used as black boxes.
■ Properties, functional characteristics and availability of P-Comps are known and documented, therefore the performance and availability of lines can be estimated in design phase with better accuracy. The method reduces the necessary skill of users.
■ P-Comps can be tested individually.
■ A P-Comp has clearly defined hardware and software interfaces. For components from sub-suppliers, these interface characteristics are implemented in 'P-Task Interfaces'. Improvements inside the P-Comps can be done without changes to the rest of the system.
■ On the field-bus level different communication protocols can be used, but from the "real-world" interface on P-Comp level to higher levels of the hierarchy a common standard communication protocol has to be used, so that application software components can be easily added or removed. The application software is completely independent of the used field-bus technology.
■ Each HMI station connected to the control network provides full access to P-Comp controller signals and program variables.
■ The standard interfacing and communication method provides also access to all relevant process signals available inside the P-Comp controller and all P-Comp program variables for other software components used for monitoring, diagnosis, process optimization, order management, as well as the communication between these components.

The proposed methods together with additional objects and advantages thereof will be best understood from the following description of specific embodiments when read in connection with the accompanying drawings.

### Brief description of the drawings:

- Fig. 1: shows the basic architecture of the modular and hierarchical organized system of reusable components, according to the invention;
- Fig. 2: shows a distribution of control functions;
- Fig. 3: shows examples of P-Comps including hardware, tasks and interfaces.

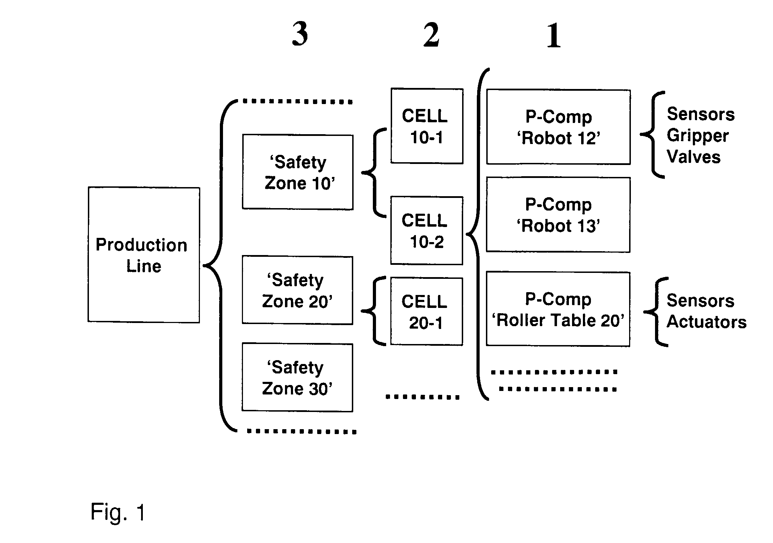

Referring now to the figures of the drawings in detail and first, particularly, to Fig. 1 thereof, there is seen a basic system architecture, containing process components, called P-Comps (1) as lowest level components, production cells (2) in a second level and safety zones (3) as a top level. One or more safety zones (3) form the entire manufacturing line. Smaller production lines may have just one safety zone (3) which may contain just one production cell (2).

A P-Comp (1 ) consists of a well defined set of hardware and software. All hardware elements or components of a production line (except the produced parts) belong to P-Comps (1). The set definition is process oriented. Software components belong to one of the three system levels (1, 2, 3), but can be installed on one control hardware resources or distributed on a network of control hardware resources.

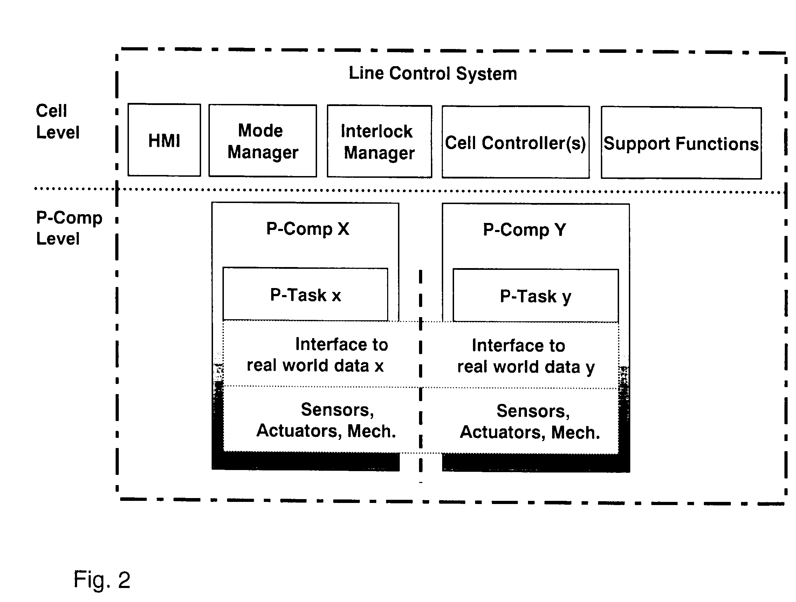

Fig. 2 shows a distribution of control system functions. It is shown that specified control software components act on at least the two following levels:
■ A cell integration level, where the interface to the human operator (HMI), a mode manager, a interlock manager handling possible interlocks between mechanical components, the Cell Controllers and support functions for diagnosis, restart, etc. are located, and
■ The level of the Process Components, being represented by the P-Tasks regarding software implementation. P-Tasks will interfere with the "Real World" via an interface.

To define the control system on a component-based view, it is defined exactly what a process component is and which kind of control architecture is used:

A P-Comp is a collection of process hardware (e.g. one roller table including motors, cylinders, valves, sensors, etc.), software components, controller hardware to run the software components and documentation. This collection is handled as one single, reusable, standardized product. The main idea of using P-Comps is the vision of building the complete production line application by easily 'plugging together' the P-Comps needed for the specific line.

The basic benefit of the P-Comp is the reusability. Within the architecture a P-Comp represents units which are intended to be reused for different lines. The following list covers the main properties of a P-Comp which
■ is based on a mechanical set of components and sub-components;
■ has a well defined software interface, mechanical interfaces, energy and fluid supply interfaces;
■ has usually more than one movement;
■ is configuration independent and defined regardless of how many other components are connected to it, even if their type could be predefined;
■ can be tested independently.

A P-Comp has one and only one communication interface visible from higher system levels. A P-Comp has control functionality with at least one software task which runs on any appropriate CPU hardware belonging to the system. It may also share the CPU with other P-Comp controllers. Any I/O to real world sensors and actuators belongs to one of the P-Comp. P-Comps are clients with regard to the real-world interfaces which provide a data server functionality, i.e. several P-Comps can access data from the same server. P-Comps are servers with regard to higher-level control like cell-controller, mode manager, etc. and other applications like diagnostic tools.

### As partly described above, a P-Comp consists of:

■ The set of P-Comp mechanical hardware components;
■ The set of P-Comp control hardware components;
■ The set of P-Comp software components (minimum: P-Task providing one P-Function);
■ P-Comp description and documentation (on paper or any electronic Format), including default configuration, I/O configuration; the sum of all P-Comp descriptions is collected in a 'P-Comp data sheet'.

### P-Comp Mechanical Hardware Components:

The mechanical hardware assigned to a P-Comp is the complete set of tools and devices needed to perform the specific functionality this P-Comp provides to the framing process. Sensors are included in the tooling, provided by the mechanical engineers.

### P-Comp Control Hardware Components:

### Computer Hardware:

There might (and probably will) be more than one P-Comp, whose P-Tasks are running on the same computer or embedded controller.

### Field Devices:

All kind of sensors and actuators (e.g. valves, pumps, motors, robots) needed to control the specified process.

### P-Comp Software Components:

The minimum P-Comp software representation consists of a P-Task providing at least one P-Function.

### P-Task:

The internal representation of a P-Comp within the control-system is called P-Task. A P-Task is a software process which handles the functionality the P-Comp provides. This functionality is accessed via Functions, called P-Functions.

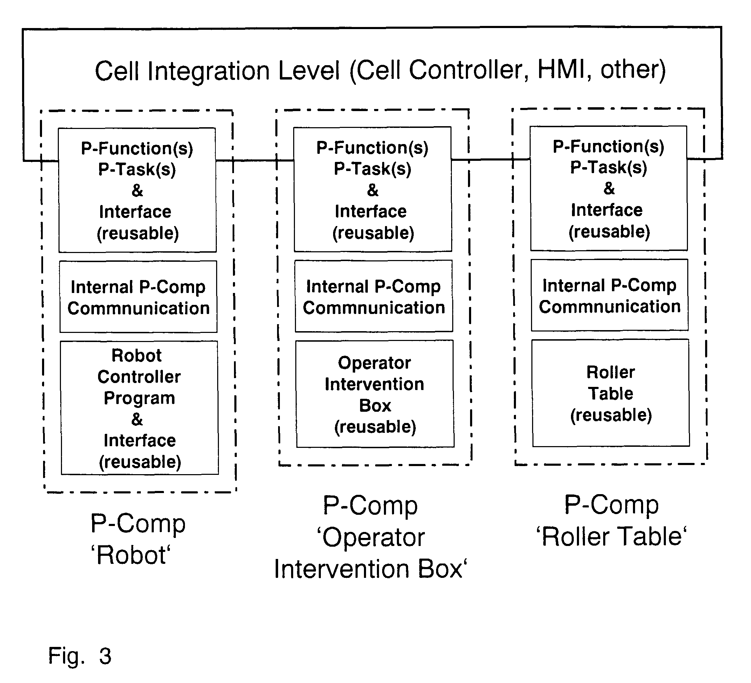

This P-Task does not change for identical P-Comps. For example, each P-Component 'Roller Table' will be represented by one and only one type of P-Task and assigned P-Functions. No matter how these P-Functions are called or used by the Cell Controller, the P-Task does not change and is identical for all applications using this P-Comp. There might be additional functions or services in later versions of this P-Task, but it always has to be compatible for existing applications. (Compatibility downwards). From control-system point of view the P-Task defines a logical interface to the system. This logical interface standardizes the P-Comp on system level and the software package running as representation of that P-Comp is reusable. Fig. 3 shows the control system and three P-Comps, that is a robot, an operator intervention box and a roller table. The interface to the P-Comps is reusable, also the software for the roller table and the operator intervention box can be a fixed standard. The robot programs will change due to its flexibility, nevertheless the interfacing mechanism to the robot will be reusable, as well as many support functions like diagnostics.

### P-Task Interface:

In the case of P-Comps based on specific, third-party controllers, such as robots, a special interface is proposed, the P-Task interface, to act between the Cell Controller and the specific controllers. It handles
■ the function call from the Cell Controller and transmits it into a task on the specific controller,
■ alarms and local diagnosis such as timing checks.
■ return messages to the Cell Controller.

### P-Functions:

Each functional entry-point of a P-Task is called a P-Function. A P-Function is called from the Cell Controller, arguments may be added to the P-Function depending on its declaration. The execution of a P-Function therefore is initiated from the Cell Controller, but handled within the P-Task.

A P-Function may be divided into individual reusable blocks, called P-Steps. These P-Steps are visible as functional entries in the P-Task, too. However, in normal operation mode the Cell Controller calls P-Functions only.

P-Steps may be called in manual mode for commissioning, test and system restart.

### P-Functions are divided in different types:

■ Control Functions: request for control, e.g. for the P-Comp roller table'pallet_in'or 'pallet_out';
■ Environment Functions to handle different modes, e.g. auto, manual, dry mode, test, simulation;
■ Support Functions: (diagnosis, history, trends, alarms, restart);
■ Configuration Functions (during engineering phase only, not to be used during run-time).

## Claims

1. Method for the engineering of a discrete manufacturing line, especially a robot-based production line , which comprises:
a) preparing a modular hierarchical organized system of reusable components (1,2,3), wherein
■ the first and lowest level components are process components (e.g. robots, machinery or transportation units), called P-Comps (1), each realized by a collection of process hardware (e.g. motors, cylinders, valves and sensors), and components of software and hardware for at least control, alarm handling, local diagnostic and documentation purposes,
■ the second system level contains at least one production cell (2), each cell (2) containing a working closely together group of P-Comps (1), a cell controller, which co-ordinates the P-Comps (1), and software modules for higher level functions,
■ the third system level is defined as having at least one safety zone (3), each containing at least one cell (2),
■ as a top level the manufacturing line contains at least one safety zone (3), and
■ all software components and modules are adaptable , and
b) designing and engineering of a specific manufacturing line by composing of prepared system components (1,2,3) by the following steps:
■ selection of P-Comps (1 ) needed,
■ installation of P-Comp hardware on customers site,
■ installation of additional reusable cell hardware (e.g. cell controllers) on customers site
■ installation, connection and configuration of software components on customers site, and
■ doing commissioning and system test.

2. Method according to claim 1, characterized in that preparing the modular system includes specifying software components on the second level, which act as an interface to a human operator, as safety manager for handling possible interlocks between mechanical components and which support functions for alarm, diagnosis and system restart.

3. Method according to claim 1 or 2, characterized in that preparing the modular system includes specifying the P-Comps (1) having only one communication interface visible from the system level.

4. Method according to one of the claims 1 to 3, characterized in that preparing the modular system includes specifying the P-Comps (1 ) having a well defined software interface, mechanical interfaces, and energy and fluid interfaces.

5. Method according to one of the claims 1 to 4, characterized in that preparing the modular system includes specifying the P-Comps (1) each having its own intelligence as a software task either on an own CPU or on a CPU able to handle several tasks of different P-Comps in parallel.
